Europäisches Patentamt

European Patent Office

Office européen des brevets

(11) Veröffentlichungsnummer: **0 067 928**
**B1**

(12) **EUROPÄISCHE PATENTSCHRIFT**

(45) Veröffentlichungstag der Patentschrift:
**08.01.86**

(21) Anmeldenummer: **82102058.3**

(22) Anmeldetag: **13.03.82**

(51) Int. Cl.⁴: **B 60 H 1/22**, B 60 H 1/14,
F 24 D 7/00, F 24 J 3/00

(54) **Heizungssystem mit Schmieröldrosselung für Kraftfahrzeuge.**

(30) Priorität: **15.06.81 DE 3123633**

(43) Veröffentlichungstag der Anmeldung:
**29.12.82 Patentblatt 82/52**

(45) Bekanntmachung des Hinweises auf die Patenterteilung:
**08.01.86 Patentblatt 86/2**

(84) Benannte Vertragsstaaten:
**DE FR GB IT**

(56) Entgegenhaltungen:
**DE - A - 2 928 999**
**DE - A - 2 932 448**
**DE - A - 3 012 760**
**DE - A - 3 126 534**
**GB - A - 2 056 046**

(73) Patentinhaber: **Klöckner-Humboldt-Deutz**
**Aktiengesellschaft,**
**Deutz-Mülheimer-Strasse 111 Postfach 80 05 09,**
**D-5000 Köln 80 (DE)**

(72) Erfinder: **Moser, Gottfried, Steinknippen 22,**
**D-5060 Bergisch Gladbach (DE)**
Erfinder: **Nau, Walter, Dipl.-Ing.,**
**Johann-Pullem-Strasse 8, D-5000 Köln 50 (DE)**
Erfinder: **Neumann, Ernst-Dieter, Dipl.-Ing.,**
**Pfeilstrasse 2, D-5100 Aachen (DE)**

## Beschreibung

Die Erfindung bezieht sich auf ein Heizungssystem mit Schmieröldrosselung für Fahrzeuge oder Geräte mit Brennkraftmaschinenantrieb, mit einer innerhalb der Brennkraftmaschine angeordneten Hochdruckförderpumpe, die aus dem Schmierölbehälter der Brennkraftmaschine unter Temperaturerhöhung über ein Drosselelement fördern kann, sowie mit einem Heizungswärmetauscher, der in einer Bedienungs- oder Fahrgastkabine des Fahrzeuges oder Gerätes angeordnet ist.

Ein solches Heizungssystem ist bekannt (DE-A 2 932 448). Dabei wird jedoch das vom Drosselelement erwärmte Schmieröl direkt dem Heizungswärmetauscher zugeführt, so dass direkt mit dem Schmieröl in Verbindung stehende Leitungen auch ausserhalb der Brennkraftmaschine angeordnet sind. Dies trifft ggf. auch für Ventile, Verschraubungen und dgl. zu. Wird eines dieser Teile undicht, so besteht die Gefahr, dass, ohne dass es der Fahrer bzw. die Bedienungsperson feststellt, Schmieröl verlorengeht, was schliesslich zur vollständigen Zerstörung der Brennkraftmaschine führt.

Aufgabe der vorliegenden Erfindung ist es daher, ein Heizungssystem zu schaffen, bei dem sichergestellt ist, dass selbst bei auftretenden Undichtheiten im Heizungskreislauf bzw. in dessen Elementen, wie Ventilen, Verschraubungen und Leitungen kein Schmieröl nach aussen dringen kann. Dabei soll trotzdem eine gute Heizwirkung mit einer einfachen Regelung erzielt werden. Gelöst wird die Aufgabe der Erfindung dadurch, dass der zumindest die Hochdruckförderpumpe, das Drosselelement und ein Leitungssystem aufweisende Primärkreislauf vollständig innerhalb der Ölwanne bzw. des Schmierölbehälters der Brennkraftmaschine angeordnet ist und dass ein Sekundärkreislauf vorgesehen ist, der einen innerhalb der Brennkraftmaschine angeordneten Zwischenwärmetauscher, eine Umwälzpumpe und den Heizungswärmetauscher umfasst. Durch diese Ausgestaltung der Erfindung sind alle Schmieröl-fördernden Teile innerhalb der Ölwanne bzw. dem Schmierölbehälter angeordnet, so dass möglicherweise auftretende Leckagen keinen Verlust von Schmieröl zur Folge haben. Der Zwischenwärmetauscher kann entweder unterhalb der Schmieröloberfläche im Schmierölbehälter oder der Ölwanne angeordnet sein oder aber auch im Primärkreislauf hinter dem Drosselelement eingebaut werden. Dadurch lässt sich eine beliebige Anpassung des Sekundärkreislaufes an die jeweiligen Erfordernisse bewerkstelligen. Wird der Zwischenwärmetauscher in den Primärkreislauf eingebaut, so ist es vorteilhaft, wenn hinter diesem ein Stromregelventil eingebaut ist, welches zur Wirkungsgradverbesserung des Zwischenwärmetauschers einen gewissen Mindestdruck aufrechterhält, so dass kein Leerlaufen und Schäumen des Öls auf der Primärseite des Zwischenwärmetauschers eintritt.

Der Sekundärkreislauf kann, unabhängig davon wie er ausgestaltet ist, sowohl mit gleichartigem Öl wie der Primärkreislauf, aber auch mit einer anderen, vorzugsweise nicht gefrierenden Flüssigkeit gefüllt sein. Die Regelung der Heizwirkung kann auch durch Regelung der Wärmeentwicklung im Primärkreislauf erfolgen. Wie dies geschehen kann und wie der Primärkreislauf aufgebaut sein kann, ist der zum Stand der Technik angegebenen Offenlegungsschrift zu entnehmen. In vorteilhafter Weise, insbesondere dann, wenn die Hochdruckförderpumpe und die Umwälzpumpe gemeinsam angetrieben werden, erfolgt die Regelung der Heizwirkung durch eine steuerbare Kurzschlussleitung im Sekundärkreislauf. Es ist aber auch in vorteilhafter Weise möglich, für die Umwälzpumpe einen steuerbaren Antrieb zur Regelung der Wärmeabgabe im Heizungswärmetauscher vorzusehen. Da die Förderleistung der Umwälzpumpe nicht gross zu sein braucht, kann diese beispielsweise vom elektrischen Bordnetz eines Kraftfahrzeugs elektrisch betrieben werden und mit einfachen Mitteln elektrisch in ihrer Drehzahl geregelt werden.

Es sei darauf hingewiesen, dass es gemäss der vorliegenden Erfindung nicht auf die besondere Ausgestaltung des Primärkreislaufs des Heizungssystems im einzelnen ankommt. Verwendet werden können daher auch ein Drucköl heizungssystem, bei dem durch die Hochdruckförderpumpe nach Druckreduzierung auch die Schmierstellen der Brennkraftmaschine versorgt werden. Bei einem solchen Heizungssystem ist es vorteilhaft, wenn der Zwischenwärmetauscher in das Leitungssystem vor Eintritt des Öls in das Schmierölsystem eingebaut ist. Zum Schutz der Schmierstellen und des Zwischenwärmetauschers können an sich bekannte druckabhängige Absteuerleitungen vorgesehen sein.

Zur weiteren Erläuterung der Erfindung wird auf die Zeichnung verwiesen, in denen mehrere Ausführungsbeispiele vereinfacht dargestellt sind. Es zeigen:

Fig. 1 eine vereinfachte Skizze eines wärmeerzeugenden Primärkreislaufes und eines Sekundärkreislaufes mit regelbarer Umwälzpumpe,

Fig. 2 einen Primärkreislauf mit gleichzeitiger Versorgung des Schmierölsystems durch das Drucköl des Heizungssystems sowie ein an den Primärkreislauf angeschlossener Sekundärkreislauf und

Fig. 3 eine Modifikation des Heizungssystems gemäss Fig. 1, bei dem der Zwischenwärmetauscher in den Primärkreislauf integriert ist.

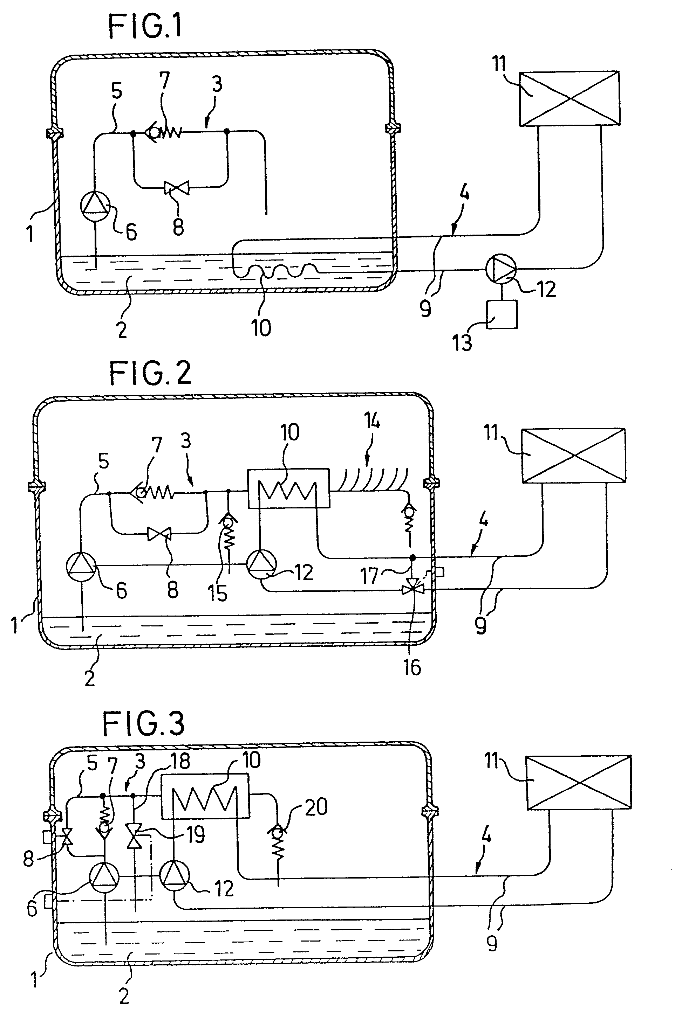

In den Fig. 1 bis 3 ist mit 1 eine beliebige Ölwanne, ein Schmierölbehälter o. dgl. dargestellt, in dem eine Ölmenge 2 vorgesehen ist. Der wärmeerzeugende Primärkreislauf ist dabei allgemein mit 3 bezeichnet, während der Sekundärkreislauf die Bezugsziffer 4 aufweist. Der Primärkreislauf 3 hat gemäss Fig. 1–3 ein Leitungssystem 5, eine Hochdruckförderpumpe 6, ein Drosselelement 7 und ein zum Drosselelement 7 parallel geschaltetes Umgehungsventil 8. Das Umgehungsventil 8 entscheidet darüber, ob Drucköl durch das Drosselelement fliesst und dabei erwärmt wird oder ob unter Umgehung des Drosselelements keine Wärme erzeugt wird. Das Umgehungsventil kann temperatur-, druck- oder drehzahlabhängig gesteuert sein und auch mittels einer Fernbedienung von aussen angesteuert werden. Erfolgt die Steuerung von aussen, so ist das Umgehungsventil, wie in Fig. 3 dargestellt, vorzugsweise an der Wand der Ölwanne bzw. des Schmierölbehälters 1 angeordnet.

Der Sekundärkreislauf 4 weist Leitungen 9, einen Zwischenwärmetauscher 10, einen Heizungswärmetauscher 11 und eine Umwälzpumpe 12 auf. Gemäss Fig. 1 ist der Zwischenwärmetauscher oberhalb des Bodens der Ölwanne 1 in der Ölmenge 2 angeordnet und nimmt dort im Öl enthaltene Wärme auf. Die Erwärmung der Ölmenge kann dabei entweder durch den Primärkreislauf oder aber auch durch die bei der Schmierung und Kühlung der Brennkraftmaschine erzeugte Wärme erfolgen. Im Ausführungsbeispiel gemäss Fig. 1 ist weiterhin die Umwälzpumpe 12 durch einen Elektromotor 13 angetrieben, der vom Bordnetz des Fahrzeuges mit Strom versorgt wird und in seiner Drehzahl zur Regulierung der Heizleistung des Sekundärkreislaufes verstellt werden kann. Durch diese Verstellung der Förderleistung der Umwälzpumpe können im Heizungswärmetauscher beliebige Wärmemengen zur Verfügung gestellt werden.

Im Ausführungsbeispiel gemäss Fig. 2 ist an den Primärkreislauf 3 ein Schmierölsystem 14 der Brennkraftmaschine angeschlossen, wobei der Zwischenwärmetauscher zwischen Primärkreislauf und Schmierölsystem eingebaut ist. Vor dem Zwischenwärmetauscher ist im Leitungssystem ein Druckminderventil 15 vorgesehen, welches eine Reduzierung des Drucks auf das für das Schmierölsystem erforderliche Niveau vornimmt. Im Ausführungsbeispiel gemäss Fig. 2 weisen die Hochdruckförderpumpe 6 und die Umwälzpumpe 12 einen gemeinsamen Antrieb auf, so dass zur Steuerung der Wärmemenge im Heizungswärmetauscher 11 im Sekundärkreislauf 4 eine Kurzschlussleitung 17 mit einem Steuerventil 16 vorgesehen ist.

Im Ausführungsbeispiel gemäss Fig. 3 ist der Zwischenwärmetauscher 10 in einen Primärkreislauf gemäss Fig. 1 eingebaut. Da der Antrieb der Hochdruckförderpumpe 6 und der Umwälzpumpe 12 gemeinsam konstant erfolgt, ist zur Regulierung der Wärmemenge vor dem Zwischenwärmetauscher 10 im Primärkreislauf 4 eine Abströmleitung 18 mit einem fernbedienbaren Abströmventil 19 vorgesehen. Um den Wärmetauscherwirkungsgrad des Zwischenwärmetauschers zu verbessern, ist im Primärkreislauf hinter dem Zwischenwärmetauscher ein Stromregelventil 20 eingebaut, das eine konstante Druckhöhe auf der Primärseite des Zwischenwärmetauschers gewährleistet.

**Patentansprüche**

1. Heizungssystem mit Schmieröldrosselung für Fahrzeuge oder Geräte mit Brennkraftmaschinenantrieb, mit einer innerhalb der Brennkraftmaschine angeordneten Hochdruckförderpumpe (6), die aus dem Schmierölbehälter (1) der Brennkraftmaschine unter Temperaturerhöhung über ein Drosselelement (7) fördern kann, sowie mit einem Heizungswärmetauscher (11), der in einer Bedienungs- oder Fahrgastkabine des Fahrzeugs oder Gerätes angeordnet ist, dadurch gekennzeichnet, dass der zumindest die Hochdruckförderpumpe (6), das Drosselelement (7) und ein Leitungssystem (5) aufweisende Primärkreislauf (3) vollständig innerhalb der Ölwanne bzw. des Schmierölbehälters (1) der Brennkraftmaschine angeordnet ist und dass ein Sekundärkreislauf (4) vorgesehen ist, der einen innerhalb der Brennkraftmaschine angeordneten Zwischenwärmetauscher (10), eine Umwälzpumpe (12) und den Heizungswärmetauscher (11) umfasst.

2. Heizungssystem nach Anspruch 1, dadurch gekennzeichnet, dass der Zwischenwärmetauscher (10) unter der Schmieröloberfläche im Schmierölbehälter (1) der Brennkraftmaschine angeordnet ist.

3. Heizungssystem nach einem der Ansprüche 1 oder 2, dadurch gekennzeichnet, dass der Zwischenwärmetauscher (10) primärseitig in das Leitungssystem (5) des Primärkreislaufs (3) hinter dem Drosselelement (7) einbezogen ist.

4. Heizungssystem nach Anspruch 3, dadurch gekennzeichnet, dass hinter dem Zwischenwärmetauscher (10) im Primärkreislauf (3) ein Stromregelventil (20) eingebaut ist.

5. Heizungssystem nach einem der Ansprüche 1 bis 4, dadurch gekennzeichnet, dass zur temperatur-, öldruck- oder drehzahlabhängigen Regelung der Wärmeerzeugung in an sich bekannter Weise eine steuerbare Antriebsanordnung für die Hochdruckförderpumpe (6) oder ein steuerbares Drosselelement (7) oder eine steuerbare Bypassleitung (8) parallel zum Drosselelement (7) im Primärkreislauf (3) vorgesehen ist.

6. Heizungssystem nach einem der Ansprüche 1 bis 5, gekennzeichnet durch eine gemeinsame Antriebsanordnung für die Hochdruckförderpumpe (6) und die Umwälzpumpe (12) und eine steuerbare (16) Kurzschlussleitung (17) im Sekundärkreis (4).

7. Heizungssystem nach einem der Ansprüche 1 bis 5, gekennzeichnet durch eine steuerbare Antriebsanordnung (13) für die Umwälzpumpe (12) zur Regelung der Wärmeabgabe im Heizungswärmetauscher (11).

8. Heizungssystem nach einem der Ansprüche 1 bis 7, mit einem zugleich von der Hochdruckförderpumpe versorgten Schmierölsystem der Brennkraftmaschine, dadurch gekennzeichnet, dass der Zwischenwärmetauscher (10) in das Leitungssystem (5) des Primärkreislaufs (3) vor Eintritt in das Schmierölsystem (14) eingebaut ist.

9. Heizungssystem nach einem der Ansprüche 1 bis 8, gekennzeichnet durch an sich bekannte druckabhängige Absteuerleitungen zum Schutz der Schmierstellen und Wärmetauscher.

**Revendications**

1. Système de chauffage, avec laminage de l'huile de graissage, pour des véhicules ou bien des appareils entraînés par des moteurs à combustion interne, avec une pompe de refoulement à haute pression (6) disposée à l'intérieur du moteur à combustion interne et qui, à partir d'un réservoir d'huile de graissage (1) de ce moteur à combustion interne, peut refouler l'huile en élevant sa température par l'intermédiaire d'un élément de laminage (7), ainsi qu'avec un échangeur thermique de chauffage (11) disposé dans une cabine de service ou de passagers du véhicule ou de l'appareil, système caractérisé en ce que le premier circuit primaire (3), comportant la pompe de refoulement à haute pression (6), l'élément de laminage (7) et un système de canalisations (5) est disposé en totalité à l'intérieur du carter à huile ou bien du réservoir d'huile de graissage (1) du moteur à combustion interne, et qu'il est prévu un circuit secondaire (4) comprenant un échangeur thermique intermédiaire (10) disposé à l'intérieur du moteur à combustion interne, une pompe de circulation (12) et l'échangeur thermique de chauffage (11).

2. Système de chauffage selon la revendication 1, caractérisé en ce que l'échangeur thermique intermédiaire (10) est disposé au-dessous de la surface de l'huile de graissage dans le réservoir (1) d'huile de graissage du moteur à combustion interne.

3. Système de chauffage selon une des revendications 1 ou 2, caractérisé en ce que l'échangeur thermique intermédiaire (10) est inséré côté primaire dans le système de canalisations (5) du circuit primaire (3) en aval de l'élément de laminage (7).

4. Système de chauffage selon revendication 3, caractérisé en ce qu'une soupape de régulation du débit (20) est insérée dans le circuit primaire (3) en aval de l'échangeur thermique intermédiaire (10).

5. Système de chauffage selon une des revendications 1 à 4, caractérisé en ce qu'il est prévu, de façon en soi connue, pour la régulation de la production de chaleur en fonction de la température, de la pression d'huile ou de la vitesse de rotation, un dispositif d'entraînement susceptible d'être commandé pour la pompe de refoulement à haute pression (6), ou bien un élément de laminage susceptible d'être commandé (7), ou bien une canalisation de dérivation susceptible d'être commandée (8), en parallèle sur l'élément de laminage (7) dans le circuit primaire (3).

6. Système de chauffage selon une des revendications 1 à 5, caractérisé par un dispositif d'entraînement commun pour la pompe de refoulement à haute pression (6) et pour la pompe de circulation (12) et une canalisation de court-circuit (17) susceptible d'être commandée (16) dans le circuit secondaire (4).

7. Système de chauffage selon une des revendications 1 à 5 caractérisé par un dispositif d'entraînement (13) susceptible d'être commandé, pour la pompe de circulation (12) afin de permettre la régulation de la chaleur délivrée dans l'échangeur thermique de chauffage (11).

8. Système de chauffage selon une des revendications 1 à 7 avec un système d'huile de graissage du moteur à combustion interne alimenté en même temps par la pompe de refoulement à haute pression, système caractérisé en ce que l'échangeur thermique intermédiaire (10), dans le système de canalisations (5) du circuit primaire (3), est inséré en amont de l'entrée dans le système d'huile de graissage (14).

9. Système de chauffage selon une des revendications 1 à 8, caractérisé en ce qu'il comporte des canalisations; en soi connues, interrompant la commande en fonction de la pression pour protéger les emplacements de graissage et l'échangeur thermique.

**Claims**

1. A heating system for an internal combustion engine-driven vehicle or appliance, the system being operable by throttling lubricating oil and comprising a high-pressure feed pump (6) disposed in the internal combustion engine and serving to feed the lubricating oil from the oil reservoir (1) of the internal combustion engine through a throttling element (7) so as to raise the oil's temperature, and also comprising a heat exchanger (11) located in and serving to heat the cab or passenger compartment of the vehicle or appliance, characterized in that a primary lubricating-oil circuit (3) including at least the high-pressure feed pump (6), the throttling element (7) and a duct system (5) is entirely disposed in the sump or oil reservoir (1) of the internal combustion engine, and in that the heating system is provided with a secondary lubricating-oil circuit (4) including an intermediate heat exchanger (10) arranged in the internal combustion engine, a circulating pump (12) and the cab or compartment-heating heat exchanger (11).

2. A heating system according to claim 1, characterized in that the intermediate heat exchanger (10) is arranged below the surface of the lubricating oil in the engine's oil reservoir (1).

3. A heating system according to claim 1 or claim 2, characterized in that the input side of the intermediate heat exchanger (10) is connected downstream of the throttling element (7) to the duct system (5) of the primary oil circuit (3).

4. A heating system according to claim 3, characterized in that the primary oil circuit (3) includes a flow control valve (20) connected thereto downstream of the intermediate heat exchanger (10).

5. A heating system according to any of the claims 1 to 4, characterized in that the primary oil circuit (3) includes – as known per se –, for the purpose of controlling the generation of heat in dependence on temperature or on oil pressure or on engine speed, an adjustable drive for the feed pump (6) or means for adjusting the throttle element (7) or a regulatable by-pass (8) around the throttle element (7).

6. A heating system according to any of the claims 1 to 5, characterized by a common drive for the feed pump (6) and the circulating pump (12) and by a short-circuiting duct (17) connected to the secondary oil circuit (4) and being controlled by regulating means (16).

7. A heating system according to any of the claims 1 to 5, characterized in that the circulating pump (12) is provided, for the purpose of controlling the heat emission of the cab or compartment- heating heat exchanger (11) with an adjustable drive (13).

8. A heating system according to any of the claims 1 to 7, the heating system being connected to the engine's lubricating system which is also supplied by the high-pressure feed pump, characterized in that the intermediate heat exchanger (10) is connected upstream of the lubricating system (14) to the duct system (5) of the primary oil circuit (3).

9. A heating system according to any of the claims 1 to 8, characterized by pressure-responsive shunt ducts – known per se – serving to protect the lubrication points and heat exchangers.

FIG.1

FIG.2

FIG.3